# EUROPÄISCHE PATENTSCHRIFT

(11) **EP 0 583 332 B1**
(45) Veröffentlichungstag und Bekanntmachung des Hinweises auf die Patenterteilung: **24.03.1999**
(21) Anmeldenummer: 92909997.6
(22) Anmeldetag: 06.05.1992
(51) Int. Cl.: F21K 2/00, G04B 19/32, B32B 27/18, G09F 13/20

(54) **INFORMATIONSTRÄGER IN SANDWICHBAUWEISE**
SANDWICH-TYPE INFORMATION SUPPORT
SUPPORT D'INFORMATION DE TYPE SANDWICH

(30) Priorität: 06.05.1991 AT 943/91; 06.05.1991 AT 944/91; 31.07.1991 AT 1527/91; 31.07.1991 AT 1528/91; 31.07.1991 AT 1529/91
(43) Veröffentlichungstag der Anmeldung: 23.02.1994
(60) Teilanmeldung: 97116550.1
(73) Patentinhaber: HAT ENTWICKLUNGSGESELLSCHAFT M.B.H., A-9020 Klagenfurt (AT)
(72) Erfinder: PAINSITH, Hermann, A-9020 Klagenfurt (AT)
(74) Vertreter: Secklehner, Günter, Dr.
(86) Internationale Anmeldenummer: AT9200065
(87) Internationale Veröffentlichungsnummer: WO9219907

(56) Entgegenhaltungen:
- EP-A- 0 419 229
- CH-A- 612 312
- DE-A- 1 288 019
- GB-A- 2 073 231
- GB-A- 2 147 542
- PATENT ABSTRACTS OF JAPAN Band 6, Nr. 100 (P-121)[978], 9. Juni 1982; & JP,A,57 034 478 (RICOH TOKEI K.K.) 24. Februar 1982

## Beschreibung

Die Erfindung betrifft einen Informationsträger in Sandwichbauweise, wie er im Oberbegriff des Anspruches 1 beschrieben ist.

Ein einteilig ausgebildeter Bauteil aus Kunststoff ist aus der EP 0 419 229 A2 bekannt, bei welchem in den Kunststoff Pigmente eingebettet sind, welche zur Abgabe von Licht nach Einstrahlung durch ein Licht angeregt werden. Dieses abgestrahlte Licht wird innerhalb des Bauteils weitergeleitet, bis es an einer vorbestimmten Stelle, welche in Form einer Markierung in die Oberfläche des Bauteils eingesetzt ist, an dieser konzentriert aus dem Bauteil austritt. Diese Markierung ist in Form einer Ausnehmung mit bestimmtem Aussehen in der Oberfläche angebracht. Dieses Leuchtmuster läßt sich durch einen Abtragvorgang herstellen, wozu teure Vorrichtungen notwendig sind.

Aus der GB 2 147 542 A ist ein gedruckter Bauteil bekannt, welcher mit einer zur Anregung von Lichtabgabe versehenen Leuchtschicht versehen ist. Diese Leuchtschicht ist durchgehend auf einem Tragkörper aufgebracht, und von einer weiteren Lage bereichsweise abgedeckt, um ein gewisses Leuchtmuster erzeugen zu können. Um dem abgestrahlten Licht eine Färbung zu verleihen, sind sowohl die freien Teilbereiche der Leuchtschicht, als auch die weitere Lage der vom Tragkörper abgewendeten Seite mit einer Schicht abgedeckt. Diese dient auch zum Schutz der unterhalb dieser angeordneten Lagen.

Aus der CH 612 312 A3 ist ein Zifferblatt für eine Uhr bekannt geworden, bei welchem in im Tragkörper des Zifferblattes angeordneten Ausnehmungen eine dünne Reflexionsschicht sowie ein phosphorizierendes Material auf der dem Betrachter zugewandten Seite eingebracht ist. Der Tragkörper des Zifferblattes ist weiters mit transparent ausgebildeten Deckschichten abgedeckt, um eine Beschädigung des nach erfolgter Bestrahlung Licht abgebenden Materials innerhalb der Ausnehmungen zu verhindern.

Weiters sind bereits verschiedenste Sandwichbauteile bekannt - gemäß EP 0 199 708 A - bei der eine Lage oder Folie aus Leder oder lederähnlichem Werkstoff formschlüssig mit einer Lage aus Kunststoff verbunden wird. Dazu wird in den Formhohlraum, beispielsweise einer Spritzgießform, eine Folie bzw. eine Lage aus Leder oder lederähnlichem Werkstoff an wenigstens eine der Formwände anliegend eingelegt. Darauf wird der Kunststoff im fließfähigen Zustand in den Formhohlraum eingebracht, sodaß er während des Erstarrungsvorganges eine formschlüssige Verbindung mit der Folie bzw. der Lage aus Leder oder lederähnlichem Werkstoff eingeht. Derartige Sandwichbauteile bzw. nach einem derartigen Verfahren hergestellte Sandwichbauteile haben sich in der Praxis, vor allem auch bei der Anwendung als Uhrarmbänder sehr gut bewährt. Es hat sich jedoch gezeigt, daß bei den unterschiedlichen Anwendungsfällen zur Herstellung derartiger Sandwichbauteile nicht alle Anforderungen einwandfrei erfüllt werden konnten.

Der vorliegenden Erfindung liegt die Aufgabe zugrunde, Informationsträger mit einem Muster mit unterschiedlichem Aussehen in einem möglichst gleichbleibenden Arbeitsprozeß herzustellen und die Erkennbarkeit bzw. Unterscheidung der Informationsträger zu verbessern. Darüber hinaus soll auch eine ausreichende Festigkeit und technisch einfache Herstellung und eine variable, designmäßige Gestaltung bei gleichen Fertigungsverfahren ermöglicht werden.

Diese Aufgabe der Erfindung wird durch die Merkmale des Anspruches 1 gelöst. Der Vorteil der Lösung liegt darin, daß durch die Verwendung von Deckschichten für den Informationsträger in Verbindung mit der freizügigen räumlichen Gestaltung durch die Herstellung des Tragkörpers aus Kunststoff eine einfache Anpassung an unterschiedliche Einsatzbedingungen, wie beispielsweise hohe Verschleißfestigkeit, designmäßige Gestaltung oder entsprechende Oberflächeneigenschaften erzielbar sind. Dazu kommt nun, daß in überraschend einfacher Weise durch die entsprechende Auslegung des eine willkürliche Raumform ermöglichenden Tragkörpers aus Kunststoff mit den in diesen eingebetteten Leuchtstoffen in Verbindung mit den an diesem angeordneten Deckschichten sich daraus ergebenden Vorteile auch noch eine zusätzliche Kennzeichnung und Unterscheidung der derart hergestellten Informationsträger dadurch möglich ist, da die Anregung der im Tragkörper angeordneten Leuchtstoffe durch die vorbestimmbare Strahlung und die Abstrahlung der von den Leuchtstoffen im Tragkörper abgegebenen Strahlung durch entsprechende Anordnung und Ausgestaltung von Tragkörper und Deckschichten räumlich bzw. örtlich getrennt sind. Darüber hinaus können auch mit derartigen Informationsträgern höhere Festigkeitseigenschaften aufgrund der Sandwichbauweise gegenüber einstückigen oder aus Folien herausgestanzten bzw. durch mechanische Bearbeitungsvorgänge erzielte Eigenschaften erreicht werden. Weiters können die optischen Eigenschaften einfach an verschiedene, unterschiedliche Einsatzbedingungen und Zustände angepaßt werden und es können vor allem durch eine beliebige Zusammenstellung bzw. Mischung von Signalen mit den unterschiedlichsten Wellenlängen auch hohen Ansprüchen gerecht werdende Identifikationsmerkmale erreicht werden. Diese Identifikationsmerkmale können in unterschiedlichen Anwendungsbereichen wie z.B. bei beleuchteten Abdeckungen für Signaleinrichtungen, bei Wegweisern, Notbeleuchtungen, Prüfvorrichtungen für unterschiedlichste Strahlenbelastungen eingesetzt werden. Weiters kann damit auch eine Sicherheits- bzw. Echtheitsprüfung vorgenommen werden, wobei diese auch als Erkennungsmerkmal bzw. Ausweis für ein Zutrittskontrollsystem dienen können. Auch ist ein Einsatz im Bankbereich als Bankomatkarte, als Telefonwertkarte, Kundenkarte, Mitgliedskarte, Ersatz für diverse Schlüssel bzw. auch eine Preisauszeichnung für Waren möglich. Die mehrlagige Ausbildung der Deckschicht ermöglicht den Einsatz von derartigen Informationsträgern für die Bestimmung unterschiedlicher, physikalischer Eigenschaften ohne großen fertigungstechnischen Aufwand. Durch die zwischen die Lagen der Deckschichten eingebrachten Druck- bzw. Designschichte und dem damit verbundenen Druckbild erreicht man einen Schutz derselben, wodurch ein hoher Widerstand derartiger Informationsträger gegen mechanische Beanspruchungen erreicht wird.

Vorteilhaft ist aber auch eine weitere Ausgestaltung nach Anspruch 2 für Informationsträger, die nur unter Einwirkung von Strahlung in den vorgesehenen Bereichen aufleuchten.

Bei einer Weiterbildung nach Anspruch 3 kann dagegen auch nach Gegenstrahlung der den Leuchtstoff anregenden Strahlung ein Leuchteffekt erzielt werden.

Vorteilhaft ist weiters eine Ausgestaltung nach Anspruch 4, da dadurch ein etwaiger Kontrollvorgang von einem unbeteiligten Beobachter nicht wahrgenommen werden kann.

Gleiches trifft auf die Ausbildung nach Anspruch 5 zu.

Nach einer anderen Weiterbildung gemäß Anspruch 6 wird eine innige Verbindung zwischen dem Grundkörper und den Decklagen erreicht, die auch eine kostengünstige und räumlich variable Herstellung des Grundkörpers ermöglicht.

Möglich ist auch eine Ausbildung nach Anspruch 7, wodurch erweiterte Echtheitskriterien einem Prüfvorgang zugrunde gelegt werden können.

Es ist aber auch eine Ausbildung nach Anspruch 8 von Vorteil, weil dadurch zusätzliche Informationsmöglichkeiten geschaffen werden können.

Von Vorteil ist auch eine Weiterbildung nach Anspruch 9, wodurch eine dauerhafte Positionierung der Deckschicht am Tragkörper einfach erreicht wird.

Eine andere Weiterbildung ist im Anspruch 10 gekennzeichnet, wodurch eine nahtlose durchgehende Festigkeitserhöhung des Tragkörpers im Bereich der Oberfläche erzielbar ist.

Vorteilhaft ist auch eine Ausgestaltung nach Anspruch 11, da dadurch mehrere unterschiedliche, sich teilweise widersprechende optische Eigenschaften an einem derartigen Informationsträger verwirklicht werden können.

Vorteilhaft ist auch eine Ausgestaltung nach Anspruch 12, da dadurch die Eigenschaften des Kunststoffes des Tragkörpers für die optischen Eigenschaften des Informationsträgers mit herangezogen werden können.

Vorteilhaft ist aber auch eine Ausbildung nach Anspruch 13, da dadurch die optischen Eigenschaften des Informationsträgers unabhängig von den eingesetzten Deckschichten festgelegt werden können und die Oberfläche der Deckschichten bzw. deren Aussehen rasch an unterschiedliche Einsatzbedingungen angepaßt werden kann. Dadurch wird auch ermöglicht, die Kosten für die Musterherstellung derartiger Informationsträger gering zu halten.

Bei der Ausführungsvariante nach Anspruch 14 wird ein den unterschiedlichsten Anforderungen an die Festigkeit bzw. die Eigenschaften, wie beispielsweise Abschirmungseigenschaften, geeigneter Aufbau der Deckschichten bzw. des Tragkörpers ermöglicht.

Nach einer anderen Ausführungsvariante, wie sie im Anspruch 15 gekennzeichnet ist, können die von den Deckschichten nicht abgedeckten Bereiche zur Identifikation bzw. zur Übermittlung von Signalen oder Informationen benutzt werden.

Die Weiterbildung nach Anspruch 16 ermöglicht demgegenüber eine vollständige Abschirmung des Innenraums des Tragkörpers von auf diesen einwirkenden Strahlungen unterschiedlichster Art, sodaß tatsächlich nur die in Abhängigkeit von den Durchbrüchen bzw. den verwendeten Folien zulässigen Strahlungen in das Innere des Informationsträgers eintreten können.

Bei der Ausgestaltung nach Anspruch 17 ist von Vorteil, daß auch dieser Bereich für die Übertragung von Lichtstrahlungen bzw. die optische Kontrolle des Inneren des Informationsträgers verwendet werden kann.

Die Weiterbildung nach Anspruch 18 ermöglicht eine rasche Identifikation von Informationsträgern bzw. eine einfache Ausrichtung in gewünschte Orientierungen aufgrund der in unterschiedlichen Teilbereichen unterschiedlichen zulässigen Wellenlängen der zum Durchtritt geeigneten Strahlung.

Bei der Ausgestaltung nach Anspruch 19 kann auch der Querschnitt des Tragkörpers zur Weiterleitung von Strahlungen bzw. unterschiedlichen Informationen mitverwendet werden, und es kann trotzdem durch den Sandwichaufbau auch eine Anpassung an unterschiedliche mechanische Beanspruchungen erfolgen.

Eine besonders einfache und rationelle sowie kostengünstige Herstellung von stark beanspruchten Tragkörpern wird durch die Ausgestaltung nach Anspruch 20 erreicht.

Durch die Weiterbildung nach Anspruch 21 kann eine unterschiedliche Anpassung an die verschiedenen Einsatzzwecke des Tragkörpers einfach geschaffen werden, da durch die Verwendung der zugesetzten Leuchtstoffe bzw. Zuschlagstoffe die Nachleuchtzeit bzw. die Strahlungsintensität sowie die über diesen Effekt gespeicherte Energie wahlweise und einfach an die unterschiedlichsten Anwendungsfälle angepaßt werden kann. So kann beispielsweise als Suchmarkierung für verlorengegangene Gegenstände im Finsteren ein über längere Zeitdauer nachleuchtender Leuchtstoff bzw. Zuschlagstoff verwendet werden.

Die Ausgestaltung nach Anspruch 22 ermöglicht weiters die zur Erzielung der erfindungsgemäßen Effekte vorhandenen Schichten und Lagen gleichzeitig zur gezielten Speicherung von Informationen zu verwenden, die in vorteilhafter Weise auch noch den jeweiligen Gegebenheiten angepaßt und verändert werden können.

Vorteilhaft ist auch eine Ausgestaltung nach Anspruch 23, da dadurch die Speicherung der gewünschten Informationen auf magnetischen Weg in bekannter Technik erfolgen kann.

Es ist aber auch eine Ausbildung nach Anspruch 24 möglich, durch die eine einfache Zentrierung auf die die Informationen aufnehmenden Bereiche, beispielsweise die Stege oder Nuten bzw. Vertiefungen oder Erhöhungen, erfolgen kann. Überdies kann durch die Profilierung der Oberfläche aber auch eine größere Verbindungsfläche zwischen zwei Kunststoffolien, vor allem beim Einsatz einer Kleberschicht zum Verbinden der beiden Kunststoffolien erzielt werden, sodaß eine bessere Haftung und somit eine strapazfähigere Deckschicht geschaffen werden kann.

Eine andere Ausgestaltung beschreibt Anspruch 25, wodurch die Ausrichtung von Lese- bzw. Schreibköpfen auf die Informationsträger erreicht wird und/oder eine innige Verbindung zwischen zwei Folien einfach hergestellt werden kann.

Eine weitere vorteilhafte Ausführungsform ist im Anspruch 26 gekennzeichnet, da durch optische Strahlungen die entsprechenden vorstehenden Ausbildungsvarianten auch nur bei Auftreten einer gewünschten Wellenlänge aktivierbar sein können, und eine rasche Änderung der gespeicherten Daten bzw. deren Abfrage möglich ist.

Die Ausbildung nach Anspruch 27 ermöglicht ein rasches Setzen von digitalen Informationen und deren gesicherter, lang andauernder Speicherung, da selbst durch sehr starke Magnetfelder oder auf den Informationsträger einwirkenden Strahlungen dieser Information entgegen einem auf magnetischer Basis arbeitenden Speicher nicht gelöscht werden kann.

Die Ausgestaltung nach Anspruch 28 ermöglicht, daß der Tragkörper eigenaktiv betrieben werden kann und gemeinsam mit oder auch unabhängig von externen Empfangs-und Steuereinrichtungen der jeweilige Speicherzustand abgefragt bzw. Steuervorgänge eingeleitet werden können.

Schließlich wird durch die Ausgestaltung nach Anspruch 29 ermöglicht, daß die zur Eingabe bzw. Überprüfung erforderlichen Rechenoperationen direkt im Informationsträger vorgenommen werden können.

Die Erfindung wird nachfolgend anhand der in den Zeichnungen dargestellten Ausführungsbeispiele beschrieben.

Es zeigen:
- Fig. 1: einen erfindungsgemäßen Informationsträger in Seitenansicht, geschnitten, gemäß den Linien I-I in Fig. 2;
- Fig. 2: eine Draufsicht auf den Informationsträger nach Fig. 1;
- Fig. 3: ein Diagramm der Transmission bzw. der Durchlässigkeit für Licht durch den Tragkörper eines erfindungsgemäßen Informationsträgers;
- Fig. 4: eine andere Ausführungsvariante eines erfindungsgemäßen Informationsträgers in Seitenansicht, geschnitten, mit einem aus mehreren Schichten bestehenden Tragkörper;
- Fig. 5: eine weitere Ausbildungsmöglichkeit mit mehrlagigen Deckschichten;
- Fig. 6: einen anderen erfindungsgemäßen Informationsträger in Seitenansicht, geschnitten, mit einer räumlich verformten, insbesondere den Stirnrandbereich des Informationsträgers abdeckenden Deckschicht;
- Fig. 7: eine Überwachungsvorrichtung, die unter Verwendung des erfindungsgemäßen Informationsträgers eine Zutrittskontrolle für eine Tür ermöglicht;
- Fig. 8: die Überwachungsvorrichtung nach Fig. 7 in vergrößertem Maßstab in Draufsicht, geschnitten und vereinfachter schematischer Darstellung, mit der dieser zugeordneten Steuer- und Abfrageeinrichtung;
- Fig. 9: ein Blockschaltbild einer Steuereinrichtung in Verbindung mit den erfindungsgemäßen Informationsträgern;
- Fig. 10: eine Ausführungsvariante eines erfindungsgemäßen Informationsträgers in Seitenansicht, geschnitten, mit profiliert ausgebildeten Oberflächen des Tragkörpers bzw. der Deckschichten;
- Fig. 11: eine weitere Ausbildung des Informationsträgers mit mehrlagigem Tragkörper, sowie einer mehrschichtigen Deckschicht mit den darin angeordneten Leuchtstoffen, in Seitenansicht, geschnitten.

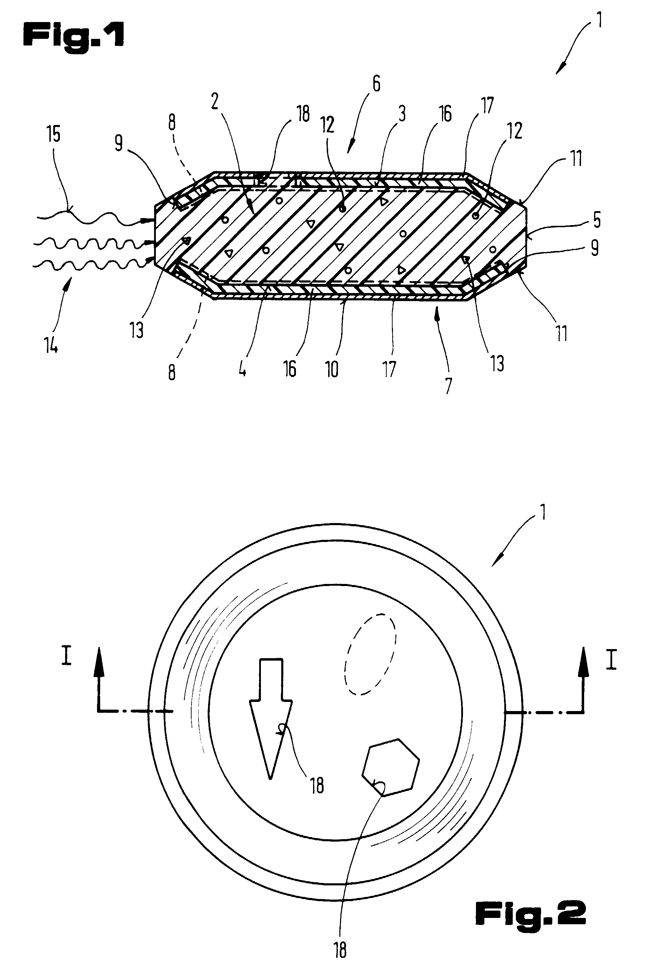

In Fig. 1 ist ein Informationsträger 1 gezeigt, der für ein Gehäuse, eine Abdeckplatte oder Sonstiges verwendet werden kann. Dieser Informationsträger 1 ist in Sandwichbauweise hergestellt und umfaßt einen Tragkörper 2, der aus einem Thermo- oder Duroplast, beispielsweise durch einen Formvorgang wie Pressen, Gießen, Spritzgießen, Spritzprägen oder Extrudieren, hergestellt werden kann. Dieser ist zumindest auf einer seiner Oberflächen 3, 4 bzw. im Stirnrandbereich 5 mit Deckschichten 6, 7 verbunden.

Diese Deckschichten 6, 7 können, wie mit strichlierten Linien zusätzlich angedeutet, über Haftvermittlungsschichten 8 oder bei Wärme- und/oder Druckeinwirkung aktivierbare Kleber am Tragkörper 2 befestigt sein. Bei Herstellung des Tragkörpers 2 durch einen Spritzgieß- oder Spritzpräge- oder Gießvorgang aus Kunststoff, bei welchem der Tragkörper 2 an den Deckschichten 6, 7 angeformt wird, kann diese Haftvermittlungsschicht 8 oder Kleberschicht aber auch wegfallen.

Wie weiters gezeigt, sind Stirnseiten 9 - bei dem vorliegenden Ausführungsbeispiel die umlaufende Stirnseite der scheibenförmigen Deckschichten 6, 7 - in den Tragkörpern 2 eingebettet, sodaß ein ebenflächiger Übergang zwischen einer Oberfläche 10 der Deckschichten 6, 7 und der daran anschließenden Oberfläche 11 des Tragkörpers 2 erzielt wird. Um nunmehr verschiedene optische Effekte mit Gegenständen für unterschiedliche Anwendungsbereiche, beispielsweise beleuchtete Abdeckungen für Signaleinrichtungen, Wegweiser, Notbeleuchtungen oder dgl., bzw. Prüfvorrichtungen für unterschiedliche Strahlenbelastungen unterschiedliche Eigenschaften, wie z.B. Wellenlängen, Frequenzen oder dgl., zu ermöglichen, kann der Tragkörper 2 mit anorganischen Leuchtstoffen und/oder organischen Leuchtstoffen 12, 13, die durch Punkte bzw. Kreise symbolisch dargestellt sind, versetzt sein.

Diese anorganischen und organischen Leuchtstoffe können durch ihre Auswahl bzw. Zusammensetzung so abgestimmt sein, daß sie nur durch eine symbolisch durch Pfeile dargestellte Strahlung 14 mit vorbestimmbarer Wellenlänge bzw. einem Wellenlängenspektrum für Strahlungen 14, 15 mit unterschiedlichen Wellenlängen angeregt werden und zu leuchten beginnen. Als Leuchtstoffe 12, 13 bzw. Leuchtpigmentzusätze können sowohl fluoreszierende als auch phosphoreszierende Pigmente verwendet werden.

Die beispielsweise phosphoreszierenden Leuchtstoffe 13 bieten hierbei den Vorteil, daß Anregung und Abtastung räumlich bzw. örtlich getrennt sein können. Die Leuchtstoffe mit Lumineszenzeigenschaften können dabei durch anorganische und organische Leuchtstoffe 12, 13 gebildet sein. Diese Leuchtstoffe sind eine Art Energiewandler, indem sie die zugeführte Energie, die sie absorbieren, direkt in sichtbares Licht umwandeln. Man spricht daher auch von einem kalten Licht. Bei diesen Leuchtstoffen handelt es sich beispielsweise um Zinksulfide und Zinksilikate, Kalziumwolframat, verschiedene Sulfide oder seltene Erden, Aluminate, Phosphate, Borate und Chloride. Je nach dem eingesetzten Leuchtstoff 12 bzw. 13 bzw. dem Anteil der Leuchtstoffe 12 oder 13, die dem Tragkörper zugesetzt werden, kann festgelegt werden, bei Einfall welcher Strahlung und gegebenenfalls in Abhängigkeit von der Intensität bzw. Wellenlänge die Leuchtstoffe 12, 13 zum Fluoreszieren bzw. Phosphoreszieren angeregt werden. Dadurch ist es in einfacher Weise möglich, gewisse Betriebszustände bzw. Umgebungsbedingungen einfach mit derartigen Infomationsträgern erkennen zu können. Vor allem hat die Verwendung von phosphoreszierenden Leuchtstoffen 13 den Vorteil, daß diese aufgrund der Menge der zugesetzten Leuchtstoffe 13 bzw. der zusätzlichen Zuschlagstoffe die Nachleuchtdauer eingestellt werden kann. Demzufolge ist es möglich, über dieses zusätzliche Kriterium der Nachleuchtdauer eine Sicherheits- bzw. Echtheitsprüfung vorzunehmen.

Bei dem in Fig. 1 dargestellten scheibenförmigen Informationsträger 1 kann es sich beispielsweise in Abwandlung der dargestellten Ausführung auch als vorteilhaft erweisen, die beiden Deckschichten 6, 7 mit einer Beschichtung 17, z.B. einem Druckbild, auszustatten. Es kann nunmehr die Beschichtung 17 derart ausgebildet sein, daß sie für Strahlen vorbestimmbarer Wellenlängen, bevorzugt für die Wellenlängen der Strahlungen 14 und 15, durchlässig ist. Damit kann vor allem erreicht werden, daß beispielsweise nur bei Durchtritt von Strahlungen 14, 15 deren Intensität bzw. Frequenz der des Leuchtstoffes 12, 13 entspricht, der Tragkörper 2 zum Leuchten, sei es nun fluoreszierend oder phosphoreszierend, angeregt wird.

Um nun für den Betrachter des sandwichartigen Informationsträgers 1 das fluoreszierende bzw. phosphoreszierende Leuchten sichtbar zu machen, ist entweder der Stirnrandbereich 5 des Tragkörpers 2 nicht von den Deckschichten 6, 7 abgedeckt bzw. ist es auch möglich, in Form von Durchbrüchen 18, welche in den Deckschichten 6, 7 angeordnet sein können, den Durchtritt des Leuchtens der Leuchtstoffe 12, 13 nach außen hin sichtbar zu machen. Für die optische und designmäßige Gestaltung der Durchbrüche 18 stehen die verschiedensten geometrischen Formen und Muster zur Verfügung, wie dies am besten aus Fig. 2 zu ersehen ist.

Die Form und Anordnung der Durchbrüche 18 in den Deckschichten 6, 7 kann einerseits dem Aussehen bzw. der optischen Gestaltung dienen und andererseits z.B. als Erkennungsmerkmal für ein Zutrittskontrollsystem dienen.

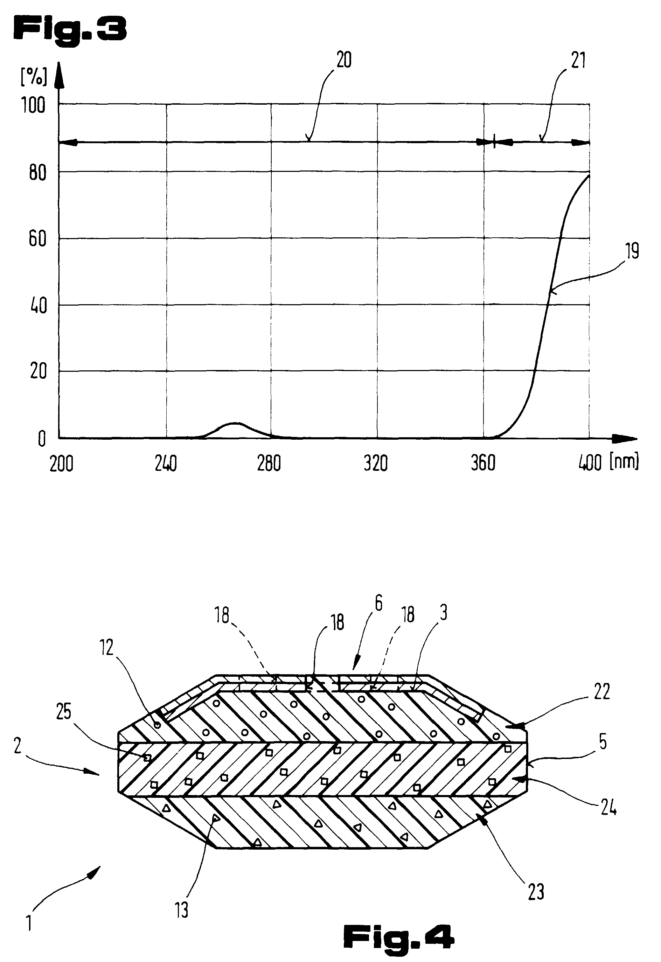

In Fig. 3 ist ein Diagramm für das Transmissionsverhalten eines bestimmten Werkstoffes, welcher für die Deckschichten 6, 7 verwendet werden kann, gezeigt. Auf der Abszisse ist ein Wellenlängenbereich der Strahlung 14, 15 in Nanometer (nm) dargestellt und auf der Ordinate ist der dazugehörige Transmissionsgrad bzw. die Durchlässigkeit des Werkstoffes für die Strahlung 14, 15 in Prozent aufgetragen. Eine Diagrammlinie 19 zeigt, daß die Deckschichte 6, 7 bzw. in einem weiten Bereich 20 für die auftretende Strahlung 14, 15 nahezu undurchlässig ist. Nur in einem kleinen Bereich 21 innerhalb einer bestimmten Wellenlänge steigt in diesem Ausführungsbeispiel der Transmissionsgrad sehr steil auf nahezu 80 % an. Dadurch ist der Werkstoff der Deckschichten 6 und/oder 7 für die auftretende Strahlung 14, 15 nur in einem kleinen Wellenlängenbereich durchlässig. Der Bereich 21 der Durchlässigkeit läßt sich durch eine bestimmte Werkstoffwahl bzw. durch den Zusatz von entsprechenden Leuchtstoffen bzw. Pigmenten oder Zuschlagstoffen festlegen und definieren. Für auftretende Strahlungen anderer Wellenlängen sind die Deckschichten 6, 7 opak.

In Fig. 4 ist der Informationsträger 1 mit nur der auf der Oberfläche 3 angeordneten Deckschicht 6 dargestellt, wobei selbstverständlich auf beiden Seiten des Informationsträgers 1 eine Deckschicht 6, 7 angeordnet sein soll. Der Tragkörper 2 ist im vorliegenden Ausführungsbeispiel auch als Sandwichbauteil ausgebildet, wobei eine Lage 22 mit dem Leuchtstoff 12, eine Lage 23 mit dem Leuchtstoff 13 und eine Lage 24 mit einem Leuchtstoff 25 durchsetzt ist. Dadurch weist jede der Lagen 22 bis 24 aufgrund der verschiedenen Leuchtstoffe 12, 13, 25 auch verschiedene Lumineszenzeigenschaften auf. Dadurch kann z.B. je nach Wellenlänge der eintretenden Strahlung eine der Lagen 22 bis 24 z.B. auch in einer unterschiedlichen Farbe zum Aufleuchten gebracht werden. Durch die Anordnung verschiedenartiger Durchbrüche 18 in der Deckschicht 6 ist es z.B. möglich, jede der Lagen 22 bis 24 einen eigenen Durchbruch 18 mit einer bestimmten Form zuzuweisen, wodurch sich aufgrund der Zuordnung z.B. das Vorhandensein einer Strahlung mit einer bestimmen Wellenlänge nachweisen läßt.

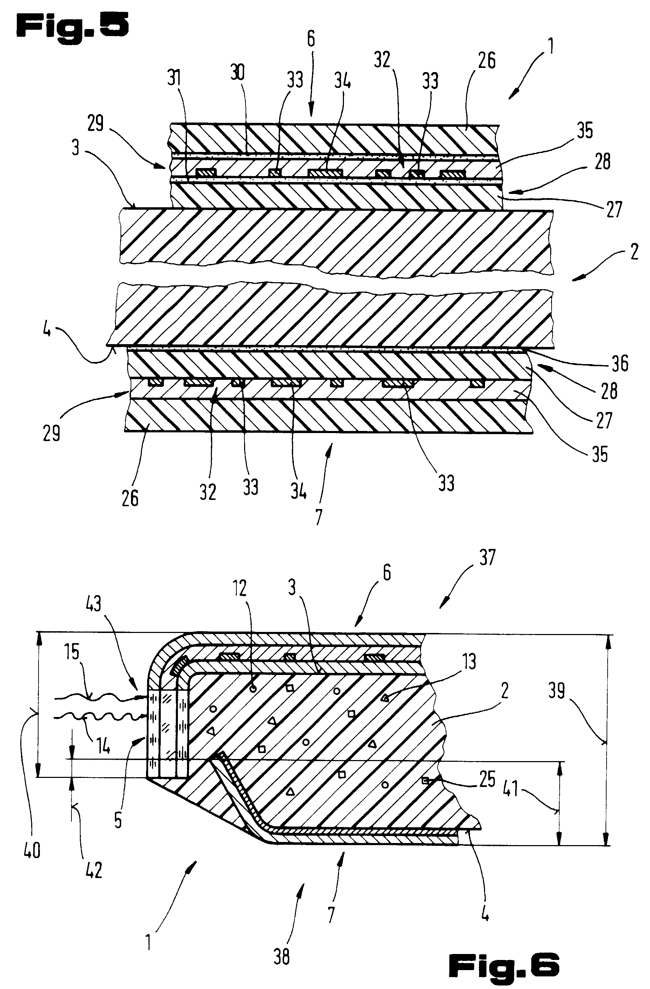

Die Fig. 5 zeigt einen möglichen Aufbau der Deckschichten 6, 7 in vergrößertem Maßstab. Die Deckschicht 6, welche an der Oberfläche 3 des Tragkörpers 2 angeordnet ist, besteht im vorliegenden Ausführungsbeispiel aus einer Deckfolie 26, aus einer Tragfolie 27, welche eine Sperrschicht 28 bilden kann, und einer zwischen diesen angeordneten Druck- bzw. Designschicht 29. Die Druck- bzw. Designschicht 29 ist mittels Kleberschichten 30, 31 mit der Deckfolie 26 bzw. Tragfolie 27 verbunden und weist ein Druckbild 32, bestehend aus verschiedenen Farbschichten 33, 34, auf. Die Zwischenräume zwischen den einzelnen Farbschichten 33, 34 bzw. zwischen dem Druckbild 32 und der Deckfolie 26 sind mit einer Ausgleichsschicht 35, z.B. einer Kleberschicht oder einem Schutzlack, ausgefüllt. Damit ist eine ebene Verbindungsfläche geschaffen, die ein problemloses und dauerhaftes Verbinden der Deckfolie 26 mit der Tragfolie 27 bzw. dem Druckbild 32 ermöglicht.

Die Deckfolie 26 weist den größten Abstand von der Oberfläche 3 des Tragkörpers 2 gegenüber den anderen Schichten bzw. Folien auf. Durch diese Lage kann dabei die Deckfolie 26 durch ein den Einflüssen der Witterung der UV-Strahlung oder den mechanischen Beanspruchungen einen hohen Widerstand entgegensetzendes Material, wie beispielsweise PVC, PC, PMMA, PP, PE, PETP oder dgl., gebildet sein. Es ist vor allem wichtig, daß vor allem die Deckfolie 26 eine hohe Kratzfestigkeit sowie einen hohen Widerstand gegen Abrieb aufweist und gleichzeitig dabei einen guten Durchtritt der auftretenden Strahlung in Richtung der Tragfolie 27 bzw. Sperrschicht 28 ermöglicht. Weiters ist es auch möglich, daß nicht die Tragfolie 27 die Sperrschicht 28 bildet, sondern das Druckbild 32 der Druck- bzw. Designschicht 29 diese Aufgabe übernimmt.

Die Deckschicht 7 ist mittels einer Kleberschicht 36 mit der Oberfläche 4 des Tragkörpers 2 verbunden und weist ebenfalls die dem Tragkörper 2 näherliegende Tragfolie 27, welche die Sperrschicht 28 bildet, auf und ist weiters mittels der Druck- bzw. Designschicht 29 mit der Deckfolie 26 verbunden. Die Druck- bzw. Designschicht 29 besteht wiederum aus dem Druckbild 32, welches die einzelnen Farbschichten 33, 34 aufnimmt und deren Zwischenräume, wie bereits zuvor beschrieben, mittels der Ausgleichsschicht 35 ausgefüllt werden.

Um diesen Durchtritt der Strahlungen mit unterschiedlichen Frequenzen bzw. Intensitäten durch die Deckschichten 6, 7 zu ermöglichen, ist es des weiteren aber selbstverständlich auch möglich, beispielsweise in den Deckschichten 6, 7 Zonen vorzusehen, die mit unterschiedlichen Leuchtstoffen oder mit den gleichartigen Leuchtstoffen wie die Lagen 22 bis 24 versehen sein können. Dadurch ist es möglich, daß bei Einstrahlung jeweils einer Strahlung mit vorbestimmter Wellenlänge und Intensität bzw. Frequenz nur vorbestimmte Bereiche des informationsträgers 1 bzw. des Tragkörpers 2 zu leuchten beginnen. Darüber hinaus ist es beispielsweise auch möglich, die einzelnen Farbschichten 33 und 34 oder auch mehrere mit unterschiedlichen Leuchtstoffen zu füllen, sodaß beispielsweise durch diese Farbschichten 33 und 34 des Druckbildes 32 bzw. der Druck- bzw. Design schicht 29 eine Aussiebung der jeweils in den verschiedenen Bereichen ersichtlich gemachten Strahlung möglich ist. Dadurch können beliebige optische Anzeigen geschaffen werden, die ein Erkennen eines Betriebszustandes des Informationsträgers 1 bzw. eines Wertes oder eine Originalitätsprüfung möglich machen. Eine derartige zusätzliche Ausbildung oder generelle Ausbildung ist bei allen gezeigten und beschriebenen Ausführungsbeispielen möglich.

Vorteilhaft kann es hierbei auch sein, wenn die einzelnen Schichten bzw. Folien, wie beispielsweise die Deckfolie 26 für einfallende Strahlungen mit vorbestimmbaren Wellenlängen, wie beispielsweise UV-Licht völlig undurchlässig, jedoch transparent ausgebildet ist, sodaß die in den darunter liegenden Schichten angelegten Leuchtstoffe bzw. Pigmente durch diese transparente Deckschicht 7 hindurch sichtbar sind.

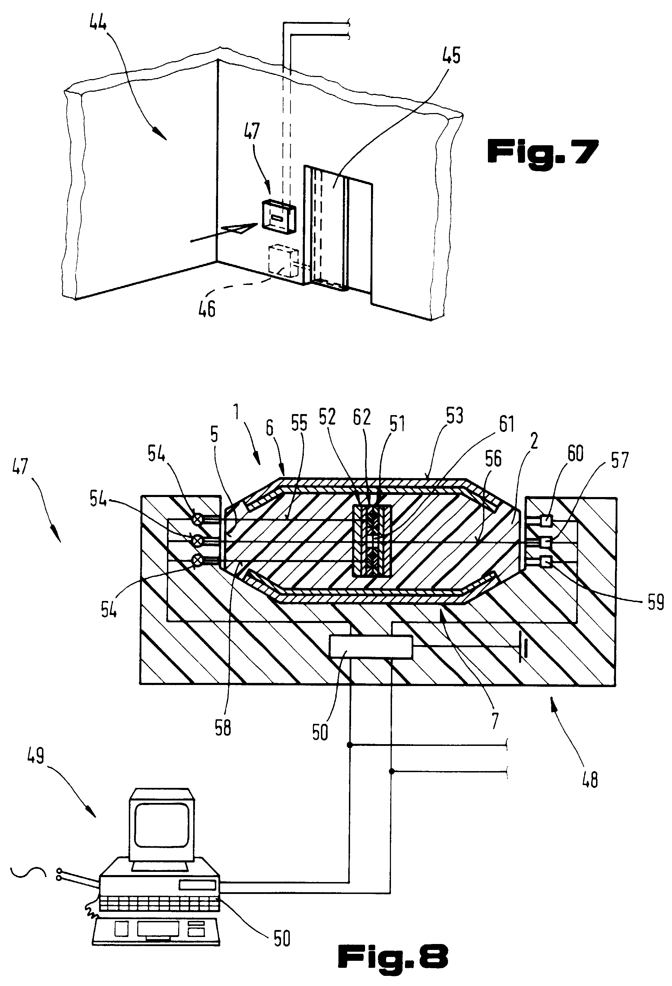

Die Fig. 6 zeigt eine weitere mögliche Ausführungsform der Anordnung der Deckschichten 6, 7 auf den Oberflächen 3, 4 des Tragkörpers 2. Dabei bildet die Deckschicht 6 des Informationsträgers 1 eine Oberseite 37 und die Deckschicht 7 eine Unterseite 38 aus. Der Informationsträger 1 weist somit von der Oberseite 37 in Richtung der Unterseite 38 gemessen eine Dicke 39 auf. Bei dieser Ausführungsform des Informationsträgers 1 erstreckt sich die Deckschicht 6 von der Oberseite 37 um eine Distanz 40 in Richtung der Unterseite 38 über den Stirnrandbereich 5. Ebenfalls ragt die Deckschicht 7 von der Unterseite 38 um eine Distanz 41 in Richtung der Oberseite 37. Dabei ist die Summe aus den Distanzen 40,41 um eine Überlappungsbreite 42 der Deckschichten 6, 7 größer als die Dicke 39 des Informationsträgers 1.

Durch die so geschaffene Uberlappungsbreite 42 der Deckschichten 6, 7 werden keine sehr engen Fertigungstoleranzen bei der Herstellung der einzelnen Deckschichten gefordert, da durch die Überlappungsbreite 42 ein Einbringen von unerwünschter Strahlung 14, 15 in den Tragkörper 2 sicher verhindert wird. Um jedoch im Stirnrandbereich 5 des Informationsträgers 1 einen gezielten Durchtritt von Strahlung 14, 15 bzw. eine Lumineszenz der Leuchtstoffe 12, 13, 25 zu ermöglichen, kann in der den Stirnrandbereich 5 überdeckenden Deckschicht 6 ein Bereich 43 angeordnet sein, welcher für die Strahlung 14, 15 bzw. Lumineszenz der Leuchtstoffe durchlässig ist. Der detaillierte Schichtaufbau der Deckschichten 6, 7 kann, wie bereits in Fig. 5 beschrieben, erfolgen.

In Fig. 7 ist schematisch ein Teil eines Raumes 44 gezeigt, der über eine Tür 45 betreten bzw. verlassen werden kann. Zur Kontrolle der Öffnungsbewegung der Tür 45, die über einen schematisch angedeuteten Antrieb 46 bewegt werden kann, dient eine Überwachungseinrichtung 47, in mit dem erfindungsgemäßen Informationsträger 1 zur Kontrolle und Überprüfung, ob eine Zutrittsberechtigung zum Öffnen der Tür 45 gegeben ist.

Die Überwachungseinrichtung 47 ist in schematisch stark vereinfachter Form in Fig. 8 dargestellt. Einer Abfrageeinrichtung 48 ist entweder in der Abfrageeinrichtung 48 und/oder extern in einer Steuereinheit 49 ein Rechner 50 zugeordnet, über den das Abfragen der in einer Speicher- bzw. Programmierschicht 51 enthaltenen Informationen herangezogen werden kann. Diese Speicher- bzw. Programmierschicht 51 dient als Zwischenschicht 52 und ist im Informationsträger 1 in etwa senkrecht zu einer Oberfläche 53, welcher die beiden Deckschichten 6 und 7 zugeordnet sind, angeordnet. Durch den zwischen den Deckschichten 6, 7 frei gehaltenen Stirnrandbereich 5 kann somit ein von Senderelementen 54 ausgesandter Lichtstrahl 55 - in vollen Linien angedeutet - durch den Tragkörper 2 hindurchtreten. Je nach Programmierung der Speicher- bzw. Programmierschicht 51 kann der Lichtstrahl 56 durch die Speicher- bzw. Programmierschicht 51 in Richtung von Empfängereinheiten 57 hindurchtreten. Ein Durchtritt der Lichtstrahlen 55 bzw. 58 ist aufgrund der Programmierung der Speicher- bzw. Programmierschicht 51 zu den Empfängereinheiten 59, 60 nicht möglich.

Entsprechend den aus dem Stand der Technik bekannten Steuereinheiten für derartige Zutrittskontrollsysteme kann dann die Auswertung bzw. der Vergleich der in dem jeweiligen Informationsträger 1 gespeicherten Informationen mit den im Rechner 50 gespeicherten Daten erfolgen und somit ist ein Soll-Ist-Vergleich möglich. Für diese Auswertung der Signale können alle beliebigen bekannten aus dem Stand der Technik bekannten Vorrichtungen verwendet werden.

Um den zuvor beschriebenen Abfragemechanismus in der Abfrageeinrichtung 48 durchführen zu können, ist es notwendig, die im Tragkörper 2 des Informationsträgers 1 angeordnete Speicher- bzw. Programmierschicht 51 der Zwischenschicht 52 zuvor zu programmieren. Dazu sind Informationsträger 61 in der Speicher- bzw. Programmierschicht 51 als Speichervorrichtung 62 vorgesehen. Die einzelnen Informationsträger 61 können entweder in einer eigenen Programmiereinrichtung oder in der Abfrageeinrichtung 48 entsprechend dem gewünschten Informationsinhalt programmiert werden. Dazu dienen eigene Programmierstrahlen, welche mit einer gewissen Wellenlänge bzw. Intensität den Informationsträger 61 opak bzw. transparent einstellen. Dieser voreingestellte bzw. programmierte Informationsinhalt der einzelnen Informationsträger 61 bleibt somit dauerhaft in der Speichervorrichtung 62, welche durch die Speicher- bzw. Programmierschicht 51 gebildet ist, solange erhalten, bis der Speicherzustand durch eine neuerliche Programmierung verändert wird.

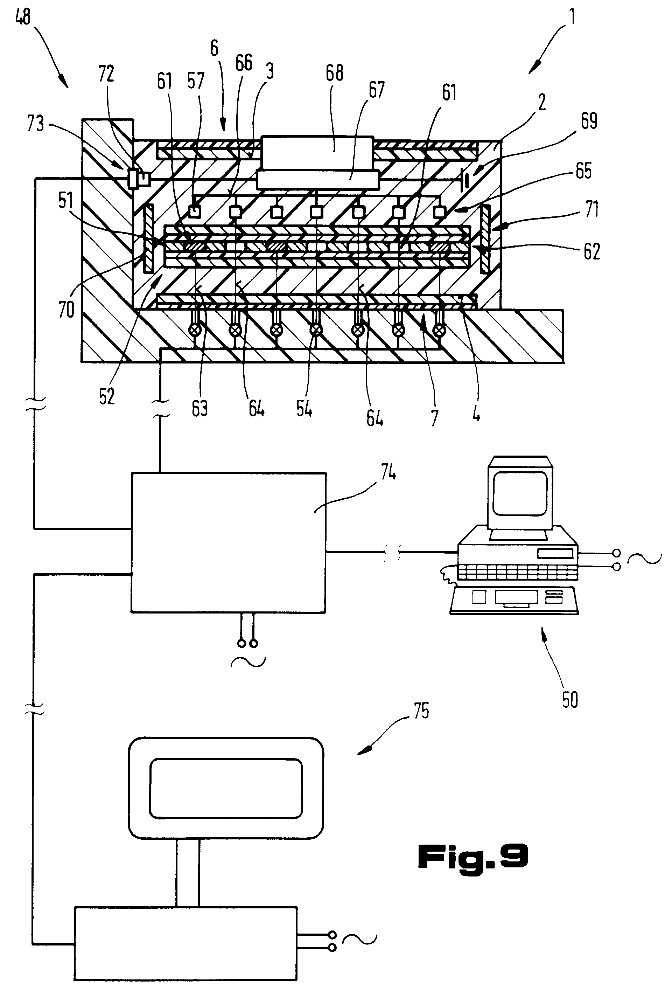

In Fig. 9 ist ein schematisches Blockschaltbild für den in der Abfrageeinrichtung 48 eingelegten Informationsträger 1 dargestellt. An den Oberflächen 3 und 4 des Tragkörpers 2 sind die Deckschichten 6, 7 angeordnet. Weiters ist im Tragkörper 2 die Zwischenschicht 52 bestehend aus der Speicher- bzw. Programmierschicht 51 mit den darin enthaltenen Informationsträgern 61 der Speichervorrichtung 62 eingebettet.

Der Lese- bzw. Kontrollvorgang der Zwischenschicht 52 im Informationsträger 1 erfolgt von den Senderelementen 54, welche in der Abfrageeinrichtung 48 angebracht sind. Die Senderelemente 54 senden Lichtstrahlen 63, 64 aus, wobei jene Lichtstrahlen mit 63 bezeichnet wurden, bei denen der Informationsträger opak ist und somit kein Durchgang zu den Empfängereinheiten 57 möglich ist und jene Lichtstrahlen mit 64, bei denen ein Durchgang durch die Informationsträger 61 zu den Empfängereinheiten 57 möglich ist. Die einzelnen Empfängereinheiten 57 bilden eine optische Empfangseinrichtung 65 aus, welche über optische Leitungen 66 mit einer Auswerteeinheit 67 in Verbindung steht. Mit der Auswerteeinheit 67 kann eine Anzeigevorrichtung 68 in Verbindung stehen, welche z.B. den aktuellen Speicherzustand der Speichervorrichtung 62 anzeigt. Eine schematisch dargestellte Energieversorgung 69, welche im Tragkörper 2 des Informationsträgers 1 eingebettet ist, steht sowohl mit der Auswerteeinheit 67 als auch der Anzeigevorrichtung 68 für die Versorgung mit Energie zur Verfügung. Für den Schutz der Zwischenschicht 52 im Tragkörper 2 können eigene Verstärkungsschichten 70 in diesem integriert sein. Weiters ist es auch möglich, die Verstärkungsschichten 70 auch gleichzeitig als Masseelemente 71 auszubilden, um dem Informationsträger 1 ein gewisses Eigengewicht zu verleihen.

Für die Weiterleitung der in der Speichervorrichtung 62 durch die einzelnen Informationsträger 61 enthaltenen Informationen sowie eventuell von der Auswerteeinheit 67 ermittelter Daten können Kontakte 72 einer Steckeranordnung 73 über die Abfrageeinrichtung 48 in eine externe Steuereinheit 74 Verwendung finden. Selbstverständlich ist es aber auch möglich, daß die Informationen bzw. Steuersignale zwischen der Abfrageeinrichtung 48 bzw. den Kontroll- oder Programmiervorrichtungen und den im Informationsträger 1 angeordneten Speichervorrichtungen 62 bzw. Informationsträgern 61 drahtlos, beispielsweise über Funk oder andere Energiefelder, erfolgen können. Die Steuereinheit 74 steht weiters mit dem Rechner 50 sowie einer weiteren Anzeigevorrichtung 75 in Verbindung. Über den Rechner 50 können der Steuereinheit 74 gewisse Befehle bzw. Steuersignale übermittelt werden, welche z.B. in der Abfrageeinrichtung 48 ein Umprogrammieren der Speicher bzw. Programmierschicht 51 bewirken.

Weiters ist es auch möglich, wenn der Informationsträger 1 z.B. als Telefonwertkarte Verwendung findet, die Abbuchung der verbrauchten Gesprächseinheiten mittels des Rechners 50 zu erfassen und von hier aus der Steuereinheit 74 den Befehl zum Abbuchen zu erteilen und dies gleichzeitig entweder in der Anzeigevorrichtung 68 des Informationsträgers 1 bzw. der externen Anzeigevorrichtung 75 dem Benutzer eines derartigen Informationsträgers 1 visuell zu verdeutlichen. Weitere Verwendungsmöglichkeiten für den erfindungsgemäßen Informationsträgers 1 bieten sich vor allem dort an, wo eine hohe Sicherheit gegen Fremdbenutzung bzw. Fälschung benötigt wird. Dies kann z.B. im Bankbereich speziell als Bankomatkarte, Telefonwertkarte, Kundenkarte, Ausweis für Zutrittskontrollsysteme, Preisauszeichnung für Waren, Mitgliedskarten oder als Ersatz für diverse Schlüssel dienen.

Zum zusätzlichen Schutz der Tragkörper, und zwar vor allem von unerwünschten Nachahmungen bzw. der gesamten Vorteile ist es weiters möglich, innerhalb der Informationsträger 1 bzw. des Tragkörpers 2 Schutzschaltungen vorzusehen, die ihre Zerstörung der Kontrollmechanismen im Informationsträger 1 ermöglichen. Dies kann nun derart erfolgen, daß im Informationsträger 1 beispielsweise ein Schwingkreis mit in diesen angeordneten Kondensatoren vorgesehen ist, bei welchen das Dielektrikum in vorbestimmbaren Bereichen einen geringen Durchschlagswiderstand aufweist bzw. dünner ist. Wirkt nun auf den Informationsträger eine entsprechend den zugesetzten Leuchtstoffen bzw. Pigmenten entsprechende Strahlung mit der vorbestimmten Wellenlänge ein, so kann diese zu den entsprechenden Umsetzorganen weitergeleitet werden und injiziert bei entsprechend hoher Leistung in dem Schutzschaltkreis eine derart hohe Spannung, daß im Bereich mit geringerem Durchschlagswiderstand bzw. geringerem Abstand zwischen den Kondensatorplatten oder parallel zueinander verlaufenden Leitungen ein Durchschlag bzw. Kurzschluß entsteht und der Schwingkreis zerstört ist. Wird dann bei weiterer Benutzung des Informationsträgers 1 bzw. Tragkörpers 2 bei Einwirken einer bestimmten Energiestrahlung kein dem Schwingkreis entsprechendes Antwortsignal erhalten, so ist davon auszugehen, daß der Informationsträger 1 bzw. Tragkörper 2 für die weitere Verwendung gesperrt wurde. Ein derartiger Schutzschaltkreis kann beispielsweise gemäß den aus dem Stand der Technik bekannten Ausführungen, wie beispielsweise nach der WO 85/04975 A, WO 82/00541 A, US 3,859,652 A, US 3,913,219 A und US 4,063,229 A usw. ausgebildet sein.

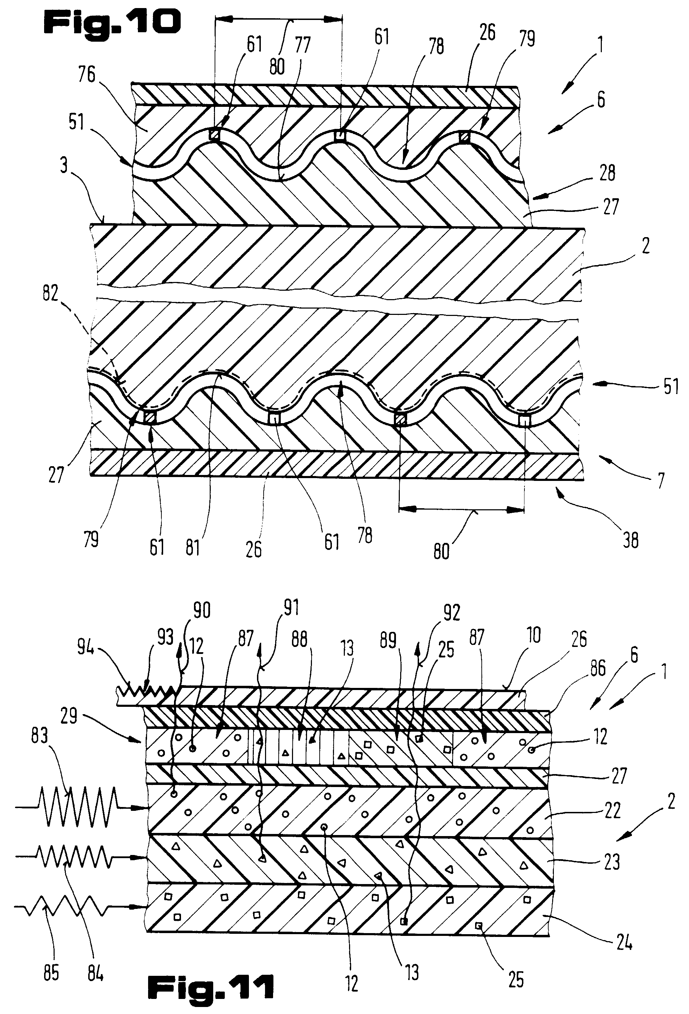

In der Fig. 10 ist eine weitere Gestaltungsmöglichkeit für den schichtmäßigen Aufbau des Informationsträgers 1 gezeigt. Dabei ist an der Oberfläche 3 des Tragkörpers 2 die Deckschicht 6 angeordnet bzw. verbunden. Die Deckschicht 6 besteht wiederum aus der Deckfolie 26 sowie der Tragfolie 27, welche als Sperrschicht 28 ausgebildet sein kann. Weiters besteht die Deckschicht 6 aus einer zwischen der Deckfolie 26 bzw. Tragfolie 27 angebrachte Zwischenlage 76, welche der Deckfolie 26 näher liegt, sowie der Speicher- bzw. Programmierschicht 51. Eine profilierte Oberfläche 77 der Tragfolie 27, welche sich auf der der Oberfläche 3 abgewendeten Seite des Tragkörpers 2 befindet, weist Vertiefungen 78 sowie Erhöhungen 79 auf, welche z.B. konzentrisch zum scheibenförmigen Informationsträger 1 oder spiralförmig dazu angeordnet sein können. Die Informationsträger 61 befinden sich jeweils an den Erhöhungen 79 der profilierten Oberfläche 77 der Tragfolie 27. Somit läßt sich ein genau vordefinierter Abstand 80 zwischen den einzelnen Informationsträgern 61 erreichen.

Eine andere Ausbildung der Deckschicht 7 ist an der Unterseite 38 des Tragkörpers 2 dargestellt. Dabei weist der Tragkörper 2 selbst eine profilierte Oberfläche 81 auf, welche aus den Vertiefungen 78 sowie Erhöhungen 79 gebildet ist. Entlang der Oberfläche 81 ist wiederum die Speicher- bzw. Programmierschicht 51 angebracht, wobei wiederum die Lage der einzelnen Informationsträger 61 an den Erhöhungen 79 in dem vorbestimmbaren Abstand 80 angebracht sind. Dadurch entsteht ein Speichermedium in Art einer optischen Disk.

Die Deckschicht 7 an der Unterseite 38 des Informationsträgers 1 besteht im vorliegenden Ausführungsbeispiel aus der der Oberfläche 81 näher liegenden Speicher- bzw. Programmierschicht 51 der Tragfolie 27 sowie zum Schutz vor äußeren Einflüssen aus der Deckfolie 26. Die Verbindung der Deckschicht 7 erfolgt hier über eine entlang der profilierten Oberfläche 81 angeordneten Verbindungsschicht 82, welche vorzugsweise als Kleberschicht ausgebildet ist.

Selbstverständlich ist es auch möglich, die Speicher- bzw. Programmierschicht 51 im Informationsträger 1 nicht als optische Speicher- bzw. Programmierschicht 51 zu verwenden, sondern es kann diese Schicht ebenso als magnetische Schicht und durch Verwendung von mit magnetischen Feldern beeinflußbaren Folien gebildet sein. Die jeweilige Programmierung und Abfrage dieser Speicher- bzw. Programmierschicht 51 kann dann über entsprechende elektromagnetische Sende- und Empfangsköpfe erfolgen.

In Fig. 11 ist ein anderer erfindungsgemäß ausgebildeter Informationsträger 1 gezeigt, bei dem nur eine der Deckschichten 6, 7 auf dem Tragkörper 2 dargestellt ist, wobei selbstverständlich auf beiden Oberflächen des Tragkörpers 2 entsprechend gleichartig oder unterschiedlich ausgebildete Deckschichten 6, 7 angeordnet sein sollen. Im vorliegenden Ausführungsbeispiel besteht nun der Tragkörper 2 aus mehreren Lagen 22,23 und 24, die beispielsweise alle durch gleichartigen oder unterschiedlichen Kunststoff mit unterschiedlichen Leitfähigkeiten für Strahlen 83,84,85 unterschiedlicher Frequenz bzw. Amplitude durchlässig sind. So ist es nunmehr möglich, daß beispielsweise die Lage 22 mit einem durch Ringe schematisch angedeuteten Leuchtstoff 12 versetzt ist, während die Lage 23 durch einen durch Dreiecke symbolisch angedeuteten Leuchtstoff 13 und die Lage 24 durch einen durch Quadrate symbolisch angedeuteten Leuchtstoff 25 gebildet ist. Es ist aber auch möglich, daß für den Tragkörper 2 ein einheitlicher Kunststoff, der für alle Strahlen 83 bis 85 durchlässig ist, gebildet ist. Die Deckschicht 6 besteht nun ihrerseits aus einer durch eine Deckfolie 26 und durch eine Tragfolie 27 gebildeten Schicht und gegebenenfalls einer dazwischen noch angeordneten Zwischenschicht 86. Zwischen der Zwischenschicht 86, deren Anordnung jedoch nicht zwingend ist, und der Tragfolie 27 ist eine Druck- bzw. Design schicht 29 vorgesehen, die aus mehreren Farbschichten 87,88 und 89 zusammengesetzt sein kann. Diese einzelnen Farbschichten 87 bis 89 können nunmehr ebenfalls mit Leuchtstoffen 12, 13, 25 versetzt sein, um sie jeweils einer eigenen Lage 22 bis 24 zuzuordnen, oder es ist auch möglich, nur diese Farbschichten 87 bis 89 mit den Leuchtstoffen 12, 13 und 25 zu versehen.

Diese Ausbildung ermöglicht nunmehr, daß bei einfallenden Strahlen 83 mit relativ hoher Frequenz und großer Amplitude die Farbschicht, wie gemäß der Darstellung im Diagramm in Fig. 3, aufgrund der verwendeten Leuchtstoffe 12 in diesem Frequenz-bzw. Amplitudenbereich ihre höchste Durchlässigkeit hat, die eintreffenden Strahlungen ungehindert durchläßt, während die anderen Strahlen 84 und 85 abgeblockt sind. Sinngemäß ist ein Durchtritt der Strahlen 84 und 85 entsprechend der Maximaldurchlässigkeit der Leuchtstoffe 13 und 25 immer dann im Bereich der Farbschichten 88 und 89 gegeben. Mit dieser relativ einfach erscheinenden Maßnahme, die jedoch auch dadurch verwirklicht werden kann, daß verschiedene Sperrfolien mit unterschiedlichen Durchlässigkeitsbereichen, die mit entsprechenden Leuchtstoffen versetzt sind, übereinander angeordnet sind, ist nur in jenen Bereichen, in denen die entsprechenden Leuchtstoffe vorgesehen sind, das Einwirken der Strahlen mit der vorbestimmten Frequenz bzw. Amplitude und gegebenenfalls auch Intensität feststellbar. Dadurch ist es möglich, verschiedene Sortierkriterien bzw. Originalitätskennzeichen in einem erfindungsgemäßen Informationsträger 1 vorzusehen, ohne daß dies für einen ungeübten bzw. nicht über Detailinformationen verfügenden Betrachter feststellbar wäre.

Weiters ist es möglich, die durch die unterschiedlichen Strahlen 83 bis 85 angeregten verschiedenen Leuchtstoffe 12, 13, 25 zur Abgabe von Licht 90, 91, 92 zu veranlassen, welches gemäß den in der Druck- bzw. Designschicht 29 angeordneten Farbschichten 87 bis 89 austritt. Damit können Bereiche mit unterschiedlichem Leuchtverhalten festgelegt werden.

Wie in diesem Ausführungsbeispiel weiters gezeigt, ist es im Bereich einer Oberfläche 10 des Informationsträgers 1 möglich, entsprechende Vertiefungen 93 bzw. Erhöhungen 94, also eine Profilierung, Prägung, eine Texturierung oder sonstige rauhe Oberflächengestaltung, anzubringen. Unter anderem ist es beispielsweise auch möglich, die Oberfläche in Art einer Fresnellinse zu versehen um gewisse optische Effekte oder Vergrößerungseffekte zu erzielen.

Es ist selbstverständlich aber auch in umgekehrter Richtung möglich, über diese durch die einzelnen Farbschichten 87 bis 89 gebildeten Zonen Strahlen 83 bis 85 auf den Informationsträger 1 einwirken zu lassen, die beispielsweise dann in unterschiedlichen Höhenlagen bzw. Schichten des Tragkörpers 2 in einer ebenen Fläche auftreten, sodaß bei einer entsprechenden auf den Informationsträger einwirkenden, von oben her senkrecht auf den Informationsträger 1 einwirkenden Strahlung, das Auftreffen dieser Strahlung in einer dazu senkrechten Ebene ohne besondere Auffälligkeit für einen uninformierten Betrachter erfolgen kann.

Selbstverständlich ist es durch diese Ausbildung auch möglich, jene Bereiche, in welchen die Informationsträger 61 der Speichervorrichtung 62 angeordnet sind, entsprechend auszubilden, sodaß in diese Bereiche nur Strahlungen mit vorbestimmter Intensität und/oder Wellenlänge und/oder Frequenz eintreten können, um somit zusätzlich eine Sicherung gegen eine unerlaubte Veränderung des Speicherzustandes der Informationsträger zu vermeiden.

Weiters ist es im Rahmen der Erfindung auch möglich, für die einzelnen Schichten und Lagen die verschiedensten vorstehend beschriebenen Materialien wechselweise einzusetzen, um gewünschte optische bzw. festigkeitstechnische Effekte und auch beliebige Kombinationen aus den zuvor beschriebenen Merkmalen zu erzielen.

Abschließend sei der Ordnung halber darauf hingewiesen, daß zum besseren Verständnis der Funktion viele Teile schematisch und unproportional vergrößert dargestellt sind.

### Bezugszeichenaufstellung

- 1: Informationsträger
- 2: Tragkörper
- 3: Oberfläche
- 4: Oberfläche
- 5: Stirnrandbereich

- 6: Deckschicht
- 7: Deckschicht
- 8: Haftvermittlungsschicht
- 9: Stirnseite
- 10: Oberfläche

- 11: Oberfläche
- 12: Leuchtstoff
- 13: Leuchtstoff
- 14: Strahlung
- 15: Strahlung

- 16: Lage
- 17: Beschichtung
- 18: Durchbruch
- 19: Diagrammlinie
- 20: Bereich

- 21: Bereich
- 22: Lage
- 23: Lage
- 24: Lage
- 25: Leuchtstoff

- 26: Deckfolie
- 27: Tragfolie
- 28: Sperrschicht
- 29: Druck- bzw. Designschicht
- 30: Kleberschicht

- 31: Kleberschicht
- 32: Druckbild
- 33: Farbschicht
- 34: Farbschicht
- 35: Ausgleichsschicht

- 36: Kleberschicht
- 37: Oberseite
- 38: Unterseite
- 39: Dicke
- 40: Distanz

- 41: Distanz
- 42: Uberlappungsbreite
- 43: Bereich
- 44: Raum
- 45: Tür

- 46: Antrieb
- 47: Überwachungseinrichtung
- 48: Abfrageeinrichtung
- 49: Steuereinheit
- 50: Rechner

- 51: Speicher- bzw. Programmierschicht
- 52: Zwischenschicht
- 53: Oberfläche
- 54: Senderelement
- 55: Lichtstrahl

- 56: Lichtstrahl
- 57: Empfängereinheit
- 58: Lichtstrahl
- 59: Empfängereinheit
- 60: Empfängereinheit

- 61: Informationsträger
- 62: Speichervorrichtung
- 63: Lichtstrahl
- 64: Lichtstrahl
- 65: Empfangseinrichtung

- 66: Leitung
- 67: Auswerteeinheit
- 68: Anzeigevorrichtung
- 69: Energieversorgung
- 70: Verstärkungsschicht

- 71: Masseelement
- 72: Kontakt
- 73: Steckeranordnung
- 74: Steuereinheit
- 75: Anzeigevorrichtung

- 76: Zwischenlage
- 77: Oberfläche
- 78: Vertiefung
- 79: Erhöhung
- 80: Abstand

- 81: Oberfläche
- 82: Verbindungsschicht
- 83: Strahl
- 84: Strahl
- 85: Strahl

- 86: Zwischenschicht
- 87: Farbschicht
- 88: Farbschicht
- 89: Farbschicht
- 90: Licht

- 91: Licht
- 92: Licht
- 93: Vertiefung
- 94: Erhöhung

## Patentansprüche

1. Informationsträger (1) in Sandwichbauweise mit einem Muster, der einen Tragkörper (2) aufweist, über dessen Oberfläche (3, 4) verteilt mehrere Deckschichten (6, 7) angeordnet sind und der einen anorganischen oder organischen Leuchtstoff (12, 13, 25) für die Anregung durch Strahlung (14, 15) mit vorbestimmbarer Wellenlänge aufweist und bei dem zumindest unterschiedliche Teilbereiche der Deckschichten (6, 7) für Strahlung (14, 15) mit unterschiedlicher, vorbestimmbarer Wellenlänge undurchlässig sind, dadurch gekennzeichnet, daß der Tragkörper (2) aus Kunststoff besteht, der mit dem Leuchtstoff (12, 13, 25) versetzt ist und die Deckschichten (6, 7) jeweils mehrere Lagen aus Kunststoffolien aufweisen, zwischen welchen eine Druck- bzw. Designschicht (29) angeordnet ist und daß zur Bildung von Identifikationsmerkmalen an den Deckschichten (6, 7) die Anregung durch die vorbestimmbare Strahlung (14, 15) und die Abstrahlung der von den Leuchtstoffen (12, 13, 25) im Tragkörper (2) abgegebenen Strahlung durch entsprechende Anordnung und Ausgestaltung von Tragkörper (2) und Deckschichten (6, 7) räumlich bzw. örtlich getrennt sind.

2. Informationsträger nach Anspruch 1, dadurch gekennzeichnet, daß der anorganische bzw. organische Leuchtstoff (12, 13) fluoreszierend ausgebildet ist.

3. Informationsträger nach Anspruch 1 oder 2, dadurch gekennzeichnet, daß der anorganische bzw. organische Leuchtstoff (12, 13) phosphoreszierend ausgebildet ist.

4. Informationsträger nach einem oder mehreren der vorhergehenden Ansprüche, dadurch gekennzeichnet, daß der Leuchtstoff (12, 13) bei Strahlung (14, 15) im unsichtbaren Bereich des Lichtes, insbesondere im UV-Strahlungsbereich, lumineszierend ausgebildet ist.

5. Informationsträger nach einem oder mehreren der vorhergehenden Ansprüche, dadurch gekennzeichnet, daß der Leuchtstoff (12, 13) bei Strahlung (14, 15) im unsichtbaren Bereich des Lichtes, insbesondere im Infrarotstrahlungsbereich, lumineszierend ausgebildet ist.

6. Informationsträger nach einem oder mehreren der vorhergehenden Ansprüche, dadurch gekennzeichnet, daß der Tragkörper (2) durch Pressen, Gießen, Spritzprägen, Spritzgießen oder Extrudieren an einer oder mehreren der Deckschichten (6, 7), gegebenenfalls unter Zwischenschaltung einer Kleber- bzw. Haftvermittlungsschicht (8) angeformt ist.

7. Informationsträger nach einem oder mehreren der vorhergehenden Ansprüche, dadurch gekennzeichnet, daß einzelne Schichten der Deckschicht (6, 7) mit unterschiedlichen Leuchtstoffen (12, 13, 25) bzw. entsprechenden Zusatzschichten versetzt sind und diese Schichten in zueinander versetzten Oberflächenbereichen angeordnet sind.

8. Informationsträger nach einem oder mehreren der vorhergehenden Ansprüche, dadurch gekennzeichnet, daß die Druck- bzw. Designschicht (29) Farbschichten (87 bis 89) aufweist, die mit unterschiedlichen Leuchtstoffen bzw. unterschiedlichen Mengen an Leuchtstoffen (12, 13, 25) und/oder Zuschlagstoffen versetzt sind und bevorzugt unterschiedliche Farben aufweisen.

9. Informationsträger nach einem oder mehreren oder vorhergehenden Ansprüche, dadurch gekennzeichnet, daß die Deckschicht (6, 7) sich über einen Teilbereich einer Oberfläche (3, 4) des Tragkörpers (2) erstreckt und deren umlaufende Stirnseite (9) in den Tragkörper (2) eingebettet ist.

10. Informationsträger nach einem oder mehreren der vorhergehenden Ansprüche, dadurch gekennzeichnet, daß eine der Deckschichten (6, 7) räumlich verformt ist.

11. Informationsträger nach einem oder mehreren der vorhergehenden Ansprüche, dadurch gekennzeichnet, daß die Deckschichten (6, 7) auf der Oberfläche (3, 4) des Tragkörpers (2) voneinander distanziert angeordnet sind.

12. Informationsträger nach einem oder mehreren der vorhergehenden Ansprüche, dadurch gekennzeichnet, daß die Deckschichten (6, 7) mit insbesondere deckungsgleichen Durchbrüchen (18) versehen sind.

13. Informationsträger nach einem oder mehreren der vorhergehenden Ansprüche, dadurch gekennzeichnet, daß eine aus zu Kunststoff artfremdem Material, z.B. Textil, Papier, bestehende Lage zwischen den kunststoffolien der Deckschicht (6, 7) eingebettet ist.

14. Informationsträger nach einem oder mehreren der vorhergehenden Ansprüche, dadurch gekennzeichnet, daß die Kunststoffolien der Dechschicht (6, 7) über eine Schweißnaht oder eine Verbindungsschicht, z.B. eine Kleberschicht (30, 31), miteinander verbunden sind.

15. Informationsträger nach einem oder mehreren der vorhergehenden Ansprüche, dadurch gekennzeichnet, daß der Tragkörper (2) scheibenförmig ausgebildet ist und an den einander gegenüberliegenden Oberflächenbereichen mit je einer der Deckschichten (6, 7) versehen ist und die Deckschichten (6, 7) im umlaufenden Stirnrandbereich (5) des Tragkörpers (2) voneinander distanziert angeordnet sind.

16. Informationsträger nach einem oder mehreren der Ansprüche 1 bis 14, dadurch gekennzeichnet, daß sich die Deckschichten (6, 7) in den einander zugewandten Endbereichen, insbesondere im umlaufenden Stirnrandbereich (5) des Tragkörpers (2), überlappen.

17. Informationsträger nach Anspruch 16, dadurch gekennzeichnet, daß ein im umlaufenden Stirnrandbereich (5) des scheibenförmigen Tragkörpers (2) angeordneter Teilbereich einer oder mehrerer Deckschichten (6, 7) transparent ausgebildet ist.

18. Informationsträger nach Anspruch 16 oder 17, dadurch gekennzeichnet, daß die Teilbereiche der Deckschichten (6, 7) im Stirnrandbereich (5) für Strahlung (14, 15) mit unterschiedlicher, vorbestimmbarer Wellenlänge undurchlässig sind.

19. Informationsträger nach einem oder mehreren der vorhergehenden Ansprüche, dadurch gekennzeichnet, daß der Tragkörper (2) aus mehreren Lagen (22, 23, 24) unterschiedlicher Zusammensetzung besteht.

20. Informationsträger nach Anspruch 19, dadurch gekennzeichnet, daß die Lagen (22 bis 24) des Tragkörpers (2) durch Coextrusion bzw. Mehrkomponentenspritzguß hergestellt sind.

21. Informationsträger nach Anspruch 19 oder 20, dadurch gekennzeichnet, daß die Lagen (22 bis 24) des Tragkörpers (2) mit unterschiedlichen Mengen von anorganischen und/oder organischen Leuchtstoffen (12, 13) und/oder Zuschlagstoffen für die Anregung durch Strahlung (14, 15) mit jeweils unterschiedlicher Wellenlänge ausgebildet sind.

22. Informationsträger nach einem oder mehreren der vorhergehenden Ansprüche, dadurch gekennzeichnet, daß eine Speicher- bzw. Programmierschicht (51) als optische und/oder magnetische Speichervorrichtung (62) vorgesehen ist.

23. Informationsträger nach einem oder mehreren der vorhergehenden Ansprüche, dadurch gekennzeichnet, daß eine Kunststoffolie einer der Deckschichten (6, 7) und/oder die Speicher- bzw. Programmierschicht (51) als magnetisierbare Folie ausgebildet ist.

24. Informationsträger nach einem oder mehreren der Ansprüche 22 bis 23, dadurch gekennzeichnet, daß die einander zugewandten Oberflächen der Kunststoffolien der Deckschichten (6, 7) und der Speicher- bzw. Programmierschicht (51) eine profilierte Oberfläche (77, 81) aufweisen.

25. Informationsträger nach Anspruch 24, dadurch gekennzeichnet, daß die profilierte Oberfläche (77, 81) durch konzentrisch umlaufende oder spiralförmige Vertiefungen (78) oder Erhöhungen (79) gebildet ist und diesen Oberflächen (77, 81) eine Verbindungs- insbesondere Kleberschicht (82) zugeordnet ist.

26. Informationsträger nach einem oder mehreren der Ansprüche 22 bis 25, dadurch gekennzeichnet, daß die Speichervorrichtung (62) der Speicher- bzw. Programmierschicht (51) durch eigene Programmierstrahlen mit einer bestimmten Wellenlänge programmierbare Informationsträger (61) aufweist.

27. Informationsträger nach einem oder mehreren der Ansprüche 22 bis 26, dadurch gekennzeichnet, daß die Speicher- bzw. Programmierschicht (51) bei Einstrahlung einer Strahlung (14) einer vorbestimmten Wellenlänge opak und bei Anstrahlung einer Strahlung (15) mit einer davon unterschiedlicher Wellenlänge transparent ist.

28. Informationsträger nach einem oder mehreren der vorhergehenden Ansprüche, dadurch gekennzeichnet, daß in den Tragkörper (2) eine Steuereinheit (49) eingebettet ist, die über Leitungen insbesondere im Stirnrandbereich (5) des Tragkörpers (2) mit angeordneten Kontakten (72) und/oder Faserleitern und/oder optischen Empfangseinrichtungen ausgestattet ist.

29. Informationsträger nach einem oder mehreren der Ansprüche 22 bis 28, dadurch gekennzeichnet, daß die Steuereinheit (49, 74) mit der Speicher- bzw. Programmierschicht (51) bzw. dem Informationsträger (61) wirkverbunden ist.

## Claims

1. Information carrier (1) in sandwich-type structure with a pattern, which comprises a carrier body (2), over the surface (3, 4) of which several cover layers (6, 7) are arranged and which comprises an inorganic or organic luminescent material (12, 13, 25) for excitation by radiation (14, 15) of a predeterminable wavelength, and in which at least different portions of the cover layers (6, 7) are impenetrable to radiation (14, 15) of a different predeterminable wavelength, characterised in that the carrier body (2) is made of plastic, which is mixed with the luminescent material (12, 13, 25) and the cover layers (6, 7) respectively comprise several layers made of plastic film, between which a print or design layer (29) is arranged, and in that to form identification marks on the cover layers (6, 7) the excitation by the predeterminable radiation (14, 15) and the radiation of the rays emitted by the luminescent materials (12, 13, 25) in the carrier body (2) are separated dimensionally and in space by a corresponding arrangement and organisation of the carrier body (2) and cover layers (6, 7).

2. Information carrier according to claim 1, characterised in that the inorganic or organic luminescent material (12, 13) is fluorescent.

3. Information carrier according to claim 1 or 2, characterised in that the inorganic or organic fluorescent material (12, 13) is phosphorescent.

4. Information carrier according to one or more of the preceding claims, characterised in that the luminescent material (12, 13) with radiation (14, 15) in the non-visible range of light, in particular the UV radiation range, is luminescent.

5. Information carrier according to one or more of the preceding claims, characterised in that the luminescent material (12, 13) with radiation (14, 15) in the non-visible range of light, in particular the infrared radiation range, is luminescent.

6. Information carrier according to one or more of the preceding claims, characterised in that the carrier body (2) is formed by pressing, casting, injection stamping, injection moulding or extrusion on one or more of the cover layers (6, 7), if necessary with the interconnection of a glue or adhesive layer (8).

7. Information carrier according to one or more of the preceding claims, characterised in that individual layers of the cover layer (6, 7) are mixed with different luminescent materials (12, 13, 25) or corresponding additional layers, and said layers are arranged in relatively offset surface areas.

8. Information carrier according to one or more of the preceding claims, characterised in that the print or design layer (29) comprises colour layers (87 to 89) which are mixed with different luminescent material or different amounts of luminescent materials (12, 13, 25) and/or aggregate and preferably have different colours.

9. Information carrier according to one or more of the preceding claims, characterised in that the cover layer (6, 7) extends over a portion of a surface (3, 4) of the carrier body (2) and its peripheral front side (9) is embedded in the carrier body (2).

10. Information carrier according to one or more of the preceding claims, characterised in that one of the cover layers (6, 7) is spatially deformed.

11. Information carrier according to one or more of the preceding claims, characterised in that the cover layers (6, 7) are arranged spaced apart from one another on the surface (3, 4) of the carrier body (2).

12. Information carrier according to one or more of the preceding claims, characterised in that the cover layers (6, 7) are provided in particular with congruent openings (18).

13. Information carrier according to one or more of the preceding claims, characterised in that a layer made of a material other than plastic e.g. textile, paper is embedded between the plastic films of the cover layer (6, 7).

14. Information carrier according to one or more of the preceding claims, characterised in that the plastic films of the cover layer (6, 7) are joined together by a weld or a connecting layer, e.g. an adhesive layer (30, 31).

15. Information carrier according to one or more of the preceding claims, characterised in that the carrier body (2) is designed to be disc-like and is provided on the opposite surface regions with one of the cover layers (6, 7), and the cover layers (6, 7) are arranged spaced apart from one another in the peripheral edge region (5) of the carrier body (2).

16. Information carrier according to one or more of claims 1 to 14, characterised in that the cover layers (6, 7) overlap in the facing end regions, in particular in the peripheral front edge region (5) of the carrier body (2).

17. Information carrier according to claim 16, characterised in that a portion of one or more cover layers (6, 7) arranged in the peripheral front edge region (8) of the disc-like carrier body (2) is designed to be transparent .

18. Information carrier according to claim 16 or 17, characterised in that the portions of the cover layers (6, 7) in the front edge region (5) are impenetrable to radiation (14, 15) of a different predeterminable wavelength.

19. Information carrier according to one or more of the preceding claims, characterised in that the carrier body (2) comprises several layers (22, 23, 24) of different composition.

20. Information carrier according to claim 19, characterised in that the layers (22 to 24) of the carrier body (2) are produced by coextrusion or multicomponent injection moulding.

21. Information carrier according to claim 19 or 20, characterised in that the layers (22 to 24) of the carrier body (2) are designed with different amounts of inorganic and/or organic luminescent materials (12, 13) and/or aggregates for excitement by radiation (14, 15) of different wavelengths respectively.

22. Information carrier according to one or more of the preceding claims, characterised in that a storage or programming layer (51) is provided as an optical and/or magnetic storage device (62).

23. Information carrier according to one or more of the preceding claims, characterised in that a plastic film of one of the cover layers (6, 7) and/or the storage or the programming layer (51) is designed as a magnetisable film.

24. Information carrier according to one or more of claims 22 to 23, characterised in that the facing surfaces of the plastic films of the cover layers (6, 7) and the storage or programming layer (51) have a profiled surface (77, 81).

25. Information carrier according to claim 24, characterised in that the profiled surface (77, 81) is formed by concentric peripherally and or spiral-shaped depressions (78) or elevations (79) and a connecting in particular adhesive layer (82) is assigned to these surfaces (77, 81).

26. Information carrier according to one or more of claims 22 to 25, characterised in that the storage device (62) of the storage or programming layer (51) by its own programming radiation of a specific wavelength has programmable information carriers (61).

27. Information carrier according to one or more of claims 22 to 26, characterised in that the storage or programming layer (51) on radiating in a ray (14) of predefined wavelength is opaque and on radiating on radiation (15) of a different wavelength is transparent.

28. Information carrier according to one or more of the preceding claims, characterised in that a control unit (49) is embedded into the carrier body (2), which via lines in particular in the front edge region (5) of the carrier body (2) is equipped with arranged contacts (72) and/or fibre conductors and/or optical receiving devices.

29. Information carriers according to one or more of claims 22 to 28, characterised in that the control unit (49, 74) is actively connected with the storage or programming layer (51) or the information carrier (61).

## Revendications

1. Support d'information (1) de construction sandwich avec un dessin qui présente un corps de support (2), sur la surface (3, 4) duquel sont disposées selon une répartition plusieurs couches de recouvrement (6, 7) et qui présente une substance luminescente (12, 13, 25) inorganique ou organique en vue de l'excitation par un rayonnement (14, 15) d'une longueur d'onde pouvant être prédéterminée et où au moins des zones partielles différentes des couches de recouvrement (6, 7) sont opaques à un rayonnement (14, 15) d'une longueur d'onde différente, pouvant être prédéterminée, caractérisé en ce que le corps de support (2) est constitué de matière synthétique qui est mélangée avec la substance luminescente (12, 13, 25) et que les couches de recouvrement (6, 7) présentent chacune plusieurs couches en feuilles en matière synthétique entre lesquelles est disposée une couche d'impression respectivement de design (29) et en ce que, pour réaliser des caractéristiques d'identification aux couches de recouvrement (6, 7), l'excitation par le rayonnement pouvant être prédéterminé (14, 15) et la réflexion du rayonnement émis par les substances luminescentes (12, 13, 25) dans le corps de support (2) sont séparées spatiallement respectivement localement par un agencement et une réalisation correspondantes du corps de support (2) et des couches de recouvrement (6, 7).

2. Support d'information selon la revendication 1, caractérisé en ce que la substance luminescente inorganique respectivement organique (12, 13) est réalisée d'une manière fluorescente.

3. Support d'information selon la revendication 1 ou 2, caractérisé en ce que la substance luminescente inorganique respectivement organique (12, 13) est réalisée de manière phosphorescente.

4. Support d'information selon l'une ou plusieurs des revendications précédentes, caractérisé en ce que la substance luminescente (12, 13), lors d'un rayonnement (14, 15) dans la plage invisible de la lumière, notamment dans la plage du rayonnement UV, est réalisée pour être luminescente.

5. Support d'information selon l'une ou plusieurs des revendications précédentes, caractérisé en ce que la substance luminescente (12, 13), lors d'un rayonnement (14, 15) dans la plage invisible de la lumière, notamment dans la plage du rayonnement infrarouge, est réalisée pour être luminescente.

6. Support d'information selon l'une ou plusieurs des revendications précédentes, caractérisé en ce que le corps de support (2) est rapporté par formage, par pression, coulée, matriçage par injection, moulage par injection ou extrusion à une ou plusieurs des couches de recouvrement (6, 7), le cas échéant en intercalant une couche de colle ou d'adhésif (8).

7. Support d'information selon l'une ou plusieurs des revendications précédentes, caractérisé en ce que différentes couches de la couche de recouvrement (6, 7) sont mélangées avec différentes substances luminescentes (12, 13, 25) respectivement de couches additionnelles correspondantes, et que ces couches sont disposées dans des zones de surface décalées les unes relativement aux autres.

8. Support d'information selon l'une ou plusieurs des revendications précédentes, caractérisé en ce que la couche d'impression respectivement de design (29) présente des couches de couleur (87 à 89) qui sont mélangées avec des substances luminescentes différentes respectivement des quantités différentes de substances luminescentes (12, 13, 25) et/ou des agrégats et qui ont de préférence des couleurs différentes.

9. Support d'information selon l'une ou plusieurs des revendications précédentes, caractérisé en ce que la couche de recouvrement (6, 7) s'étend sur une zone partielle d'une surface (3, 4) du corps de support (2) et que son côté frontal s'étendant tout autour (9) est noyé dans le corps de support (2).

10. Support d'information selon l'une ou plusieurs des revendications précédentes, caractérisé en ce que l'une des couches de recouvrement (6, 7) est déformée spatialement.

11. Support d'information selon l'une ou plusieurs des revendications précédentes, caractérisé en ce que les couches de recouvrement (6, 7) sont disposées à une certaine distance l'une de l'autre sur la surface (3, 4) du corps de support (2).

12. Support d'information selon l'une ou plusieurs des revendications précédentes, caractérisé en ce que les couches de recouvrement (6, 7) sont pourvues de perçages (18) notamment coïncidants.

13. Support d'information selon l'une ou plusieurs des revendications précédentes, caractérisé en ce qu'une couche constituée d'un matériau d'un autre type qu'en matière synthétique, par exemple en textile, papier, est noyée entre les feuilles en matière synthétique de la couche de recouvrement (6, 7).

14. Support d'information selon l'une ou plusieurs des revendications précédentes, caractérisé en ce que les feuilles de matière synthétique de la couche de recouvrement (6, 7) sont reliées par un cordon de soudure ou une couche de liaison, par exemple une couche de colle (30, 31).

15. Support d'information selon l'une ou plusieurs des revendications précédentes, caractérisé en ce que le corps de support (2) est réalisé en forme de disque et est pourvu aux zones de surface mutuellement opposées respectivement d'une des couches de recouvrement (6, 7) et que les couches de recouvrement (6, 7), dans la zone de bord frontale s'étendant autour (5) du corps de support (2), sont disposées à une certaine distance l'une de l'autre.

16. Support d'information selon l'une ou plusieurs des revendications 1 à 14, caractérisé en ce que les couches de recouvrement (6, 7) se chevauchent dans les zones d'extrémité orientées l'une vers l'autre, notamment dans la zone de bord frontale s'étendant tout autour (5) du corps de support (2).

17. Support d'information selon la revendication 16, caractérisé en ce qu'une zone partielle d'une ou de plusieurs couches de recouvrement (6, 7) disposée dans la zone de bord frontale s'étendant tout autour (5) du corps de support (2) en forme de disque est transparente.

18. Support d'information selon la revendication 16 ou 17, caractérisé en ce que les zones partielles des couches de recouvrement (6, 7) sont opaques dans la zone de bord frontale (5) à un rayonnement (14, 15) d'une longueur d'onde différente, pouvant être prédéterminée.

19. Support d'information selon l'une ou plusieurs des revendications précédentes, caractérisé en ce que le corps de support (2) est constitué de plusieurs couches (22, 23, 24) de composition différente.

20. Support d'information selon la revendication 19, caractérisé en ce que les couches (22 à 24) du corps de support (2) sont réalisées par co-extrusion respectivement par un moulage par injection à plusieurs composants.

21. Support d'information selon la revendication 19 ou 20, caractérisé en ce que les couches (22 à 24) du corps de support (2) sont réalisées avec des quantités différentes de substances luminescentes inorganiques et/ou organiques (12, 13) et/ou d'agrégats en vue de l'excitation par un rayonnement (14, 15) respectivement d'une longueur d'onde différente.

22. Support d'information selon l'une ou plusieurs des revendications précédentes, caractérisé en ce qu'une couche de stockage respectivement de programmation (51) est prévue comme dispositif de stockage optique et/ou magnétique (62).

23. Support d'information selon l'une ou plusieurs des revendications précédentes, caractérisé en ce qu'une feuille de matière synthétique d'une des couches de recouvrement (6, 7) et/ou la couche de stockage respectivement de programmation (51) est réalisée sous forme de feuille pouvant être aimantée.

24. Support d'information selon l'une ou plusieurs des revendications 22 à 23, caractérisé en ce que les surfaces orientées l'une vers l'autre des feuilles en matière synthétique des couches de recouvrement (6, 7) et de la couche de stockage respectivement de programmation (51) présentent une surface profilée (77, 81).

25. Support d'information selon la revendication 24, caractérisé en ce que la surface profilée (77, 81) est formée par des creux (78) ou surélévations (79) s'étendant concentriquement ou en forme de spirale, et qu'il est associé à ces surfaces (77, 81) une couche de liaison, notamment de colle (82).

26. Support d'information selon l'une ou plusieurs des revendications 22 à 25, caractérisé en ce que le dispositif de stockage (62) de la couche de stockage respectivement de programmation (51) présente des supports d'information (61) programmables par des rayons de programmation propres d'une longueur d'onde définie.

27. Support d'information selon l'une ou plusieurs des revendications 22 à 26, caractérisé en ce que la couche de stockage respectivement de programmation (51), lors de l'incidence d'un rayonnement (14) d'une longueur d'onde pouvant être prédéterminée est opaque et lors de l'incidence d'un rayonnement (15) d'une longueur d'onde différente de celle-ci est transparente.

28. Support d'information selon l'une ou plusieurs des revendications précédentes, caractérisé en ce qu'il est noyé dans le corps de support (2) une unité de commande (49) qui est équipée par des lignes, notamment dans la zone de bord frontale (5) du corps de support (2), de contacts disposés (72) et/ou de conducteurs de faisceaux et/ou d'installations de réception optiques.

29. Support d'information selon l'une ou plusieurs des revendications 22 à 28, caractérisé en ce que l'unité de commande (49, 74) est reliée fonctionnellement à la couche de stockage respectivement de programmation (51) respectivement au support d'information (61).
